# FASCICULE DE BREVET EUROPEEN

(11) **EP 1 695 260 B1**
(45) Date de publication et mention de la délivrance du brevet: **17.03.2010**
(21) Numéro de dépôt: 04805697.2
(22) Date de dépôt: 14.12.2004
(51) Int. Cl.: G06K 9/00, G06K 9/20

(54) **PROCEDE ET DISPOSITIF DE RECONNAISSANCE D IRIS**
VERFAHREN UND EINRICHTUNG ZUR IRISERKENNUNG
METHOD AND DEVICE FOR IRIS RECOGNITION

(30) Priorité: 18.12.2003 FR 0314883
(43) Date de publication de la demande: 30.08.2006
(73) Titulaire: SAGEM Sécurité, 75015 Paris (FR)
(72) Inventeur: RIEUL, François, F-78100 Saint-germain En Laye (FR); COTTARD, Martin, F-92420 Vaucresson (FR); BOUATOU, Vincent, F-75017 Paris (FR); MORIN, Aurélie, F-95610 Eragny Sur Oise (FR)
(74) Mandataire: Lavialle, Bruno François Stéphane
(86) Numéro de dépôt international: PCT/FR2004/003213
(87) Numéro de publication internationale: WO 2005/062235

(56) Documents cités:
- EP-A- 1 241 634
- WO-A-01/01329
- US-A- 5 956 122
- US-B1- 6 252 977

## Description

La présente invention concerne un procédé et un dispositif de reconnaissance d'iris utilisables par exemple pour le contrôle d'accès à un site protégé ou la vérification d'identité.

### ARRIERE PLAN DE L'INVENTION

Les procédés de reconnaissance d'iris les plus répandus comprennent les étapes d'acquisition d'une image d'au moins un oeil de l'utilisateur dans un spectre infrarouge et de traitement de cette image pour extraire des caractéristiques d'identification de l'iris délimité sur l'oeil par une frontière externe. Les caractéristiques d'identification sont relatives à des motifs présents dans l'iris et propres à chaque individu.

L'acquisition de l'image était au départ réalisée dans le spectre visible mais la reconnaissance automatique des motifs s'avérait peu fiable pour les iris de couleurs sombres dans lesquels les motifs sont peu contrastés. L'acquisition de l'image dans le spectre visible a rapidement été supplantée par l'acquisition d'image dans le spectre infrarouge où les motifs présentent par rapport au reste de l'iris un contraste important qui facilite leur reconnaissance automatique quelle que soit la couleur de l'iris.

La reconnaissance automatique des motifs de l'iris nécessite de localiser préalablement les frontières interne et externe de l'iris sur l'image de l'oeil. Or, on s'est aperçu que, si cette opération ne pose pas de problème pour la frontière interne, la localisation de la frontière externe est parfois inexacte. En effet, il apparaît que dans le spectre infrarouge l'iris est faiblement contrasté par rapport à la sclère qui forme le blanc de l'oeil sur la partie antérieure de celui-ci.

### OBJET DE L'INVENTION

L'invention a pour but d'obvier aux inconvénients précités.

### BREVE DESCRIPTION DE L'INVENTION

A cet effet, on prévoit, selon l'invention, un procédé de reconnaissance d'iris, comprenant les étapes d'acquérir une image d'au moins un oeil de l'utilisateur dans un spectre infrarouge et traiter cette image pour en extraire des caractéristiques d'identification à partir de l'iris délimité par une frontière externe sur l'oeil, le procédé comprenant les étapes de :
- de façon sensiblement simultanée à l'acquisition de l'image de l'oeil dans le spectre infrarouge, acquérir une image de l'oeil dans un spectre visible,
- préalablement au traitement de l'image infrarouge, déterminer la frontière externe de l'iris à partir de l'image dans le spectre visible.

Dans le spectre visible, l'iris présente un contraste suffisant par rapport au blanc de l'oeil pour permettre une localisation fiable de la frontière externe de celui-ci.

De préférence, le procédé comprend l'étape d'extraire au moins une caractéristique colorimétrique de l'image dans le spectre visible.

Lorsqu'un fraudeur désire se soustraire à un contrôle mettant en oeuvre un procédé de reconnaissance d'iris, il peut utiliser une reproduction de l'oeil d'une personne normalement habilitée à satisfaire au contrôle. La reproduction est alors réalisée avec une encre opaque aux infrarouges. Or, de telles encres sont sombres dans le visible. Ainsi, lorsque l'utilisateur habilité a les yeux clairs, il est possible de mettre au jour le subterfuge en utilisant la caractéristique colorimétrique. La réalisation des reproductions est ainsi rendue plus délicate et coûteuse.

Avantageusement, les caractéristiques d'identification sont destinées à être comparées à des caractéristiques d'identification d'iris mémorisés dans une bases de données contenant également des caractéristiques colorimétriques et la caractéristique colorimétrique extraite est utilisée pour effectuer un tri dans la base de données préalablement à la comparaison des caractéristiques d'identification.

Le premier tri réalisé à partir de la caractéristique colorimétrique permet d'accélérer la reconnaissance.

L'invention a également pour objet un dispositif de reconnaissance d'iris pour la mise en oeuvre du procédé ci-dessus, comprenant des moyens d'acquisition d'une image de l'oeil dans un spectre infrarouge, et des moyens d'acquisition d'une image de l'oeil dans un spectre visible.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue schématique représentant un dispositif de reconnaissance selon un premier mode de réalisation,
- la figure 2 est une vue schématique d'un dispositif de reconnaissance selon un deuxième mode de réalisation de l'invention.

### DESCRIPTION DETAILLEE DE L'INVENTION

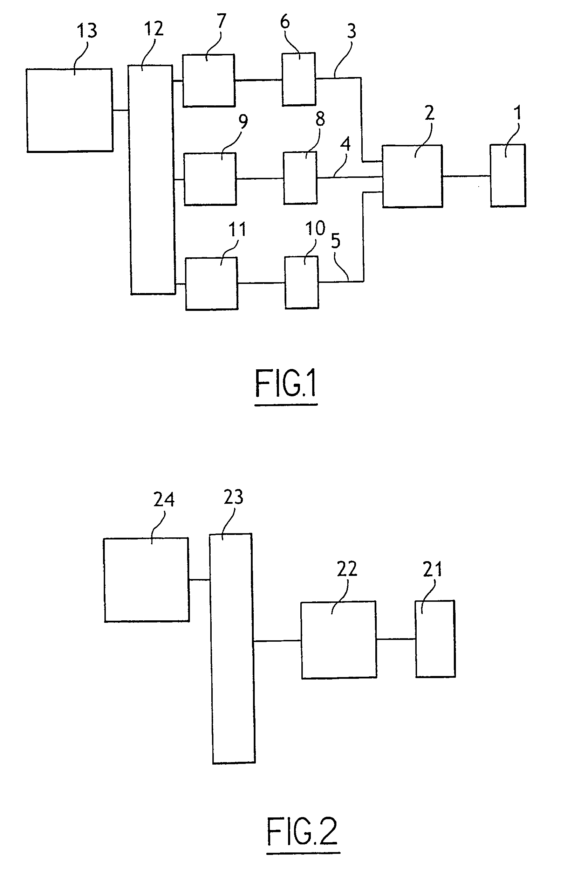

En référence à la figure 1, le dispositif de reconnaissance conforme à l'invention comprend un objectif 1 derrière lequel est disposé un organe de définition 2 de trois voies optiques 3, 4, 5. L'objectif 1 est ici de type macrophotographique.

La voie optique 3 comprend un filtre 6 absorbant le spectre infrarouge et transmettant le spectre bleu et vert et un capteur 7 ayant une sensibilité spectrale dans le bleu et le vert.

La voie optique 4 comprend un filtre 8 absorbant l'infrarouge et un capteur 9 ayant une sensibilité spectrale dans le rouge.

La voie optique 5 comprend un filtre 10 transmettant l'infrarouge et un capteur 11 ayant une sensibilité spectrale dans le proche infrarouge.

Les capteurs 7, 9, 11 sont des capteurs à transfert de charge communément appelés CCD ("Charge-Coupled Device").

Les capteurs 7, 9, 11 sont reliés à une unité informatique de traitement 12 elle-même reliée à une base de données 13 mettant en relation l'identité de personnes, des caractéristiques d'identification d'une de leur iris et une caractéristique colorimétrique de leur iris. Les caractéristiques d'identification sont relatives par exemple à des motifs de l'iris des personnes et La caractéristique colorimétrique est la couleur moyenne de l'iris ou une répartition spectrale de celle-ci.

La base de données 13 est triée en fonction de la caractéristique colorimétrique.

Lorsqu'une personne à identifier se présente devant le dispositif, les capteurs 7, 9, 11 acquièrent des images dans le spectre bleu-vert, dans le spectre rouge et dans le spectre infrarouge proche. Les images sont acquises de façon sensiblement simultanée, c'est-à-dire simultanément ou dans un laps de temps suffisamment court pour ne pas laisser à l'utilisateur le temps de bouger significativement.

Il est ensuite recherché les frontières interne et externe de l'iris.

La localisation de la frontière interne par l'unité de traitement 12 ne pose pas de problème avec l'image infrarouge dans laquelle la pupille est très contrastée par rapport à l'iris.

La localisation de la frontière externe est réalisée par l'unité de traitement 12 soit à partir de l'image dans le spectre bleu-vert dans laquelle les iris de couleurs claires sont très contrastés par rapport au blanc de l'oeil, ou dans l'image dans le spectre rouge dans laquelle les iris de couleurs sombres sont mieux contrastés par rapport au blanc de l'oeil.

Les frontière interne et externe sont utilisées pour déterminer la zone de l'image dans l'infrarouge proche correspondant à l'iris. Il est ensuite effectué un traitement de l'image dans le spectre infrarouge permettant d'extraire de cette zone de l'image les motifs qui constitueront les caractéristiques d'identification propres à chaque individu.

La caractéristique colorimétrique de l'iris est extraite des images dans le spectre bleu-vert et dans le spectre rouge par l'unité de traitement 12.

La caractéristique colorimétrique est utilisée pour faire un premier tri dans la base de données afin de sélectionner les individus qui ont une caractéristique colorimétrique identique à celle détectée. Ce premier tri présente l'avantage d'être particulièrement rapide.

Il est ensuite procédé à une comparaison des caractéristiques d'identification détectées avec les caractéristiques d'identification des individus sélectionnés.

En référence à la figure 2, selon le deuxième mode de réalisation de l'invention, le dispositif conforme à l'invention comprend un objectif 21 derrière lequel est disposé un capteur 22 ayant une sensibilité spectrale couvrant le spectre visible et le spectre infrarouge. L'objectif 21 est ici de type macrophotographique. Le capteur 22 est par exemple un capteur CCD standard de caméra couleur dont on a éliminé le filtre d'atténuation de l'infrarouge.

Le capteur 22 est relié à une unité informatique de traitement 23 elle-même reliée à une base de données 24.

Le procédé est identique à celui décrit en relation avec le dispositif selon le premier mode de réalisation, le capteur 22 fournissant une image à partir de laquelle il est possible d'obtenir une image dans au moins un spectre visible et une image dans le spectre infrarouge. De préférence, un filtre anti-rouge est placé devant le capteur 22 pour éviter que le rayonnement rouge ne vienne parasiter l'image dans le spectre infrarouge. Ce filtrage peut également être réalisé par un traitement informatique de l'image.

Bien entendu, l'invention n'est pas limitée aux modes de réalisation décrits et on peut y apporter des variantes de réalisation sans sortir du cadre de l'invention tel que défini par les revendications.

Les capteurs 7, 9, 11 peuvent également être des capteurs CMOS ("Complementary Metal Oxyde Semiconductor") .

Les spectres utilisés peuvent être différents de ceux décrits ci-dessus. Une image de l'oeil est acquise dans le spectre infrarouge et une image de l'oeil est acquise dans au moins un spectre du visible dont par exemple :
en noir et blanc,
en rouge,
en vert,
en bleu,
du rouge au vert...

## Revendications

1. Procédé de reconnaissance d'iris, comprenant les étapes d'acquérir une image d'au moins un oeil de l'utilisateur dans un spectre infrarouge et traiter cette image pour en extraire des caractéristiques d'identification à partir de l'iris délimité par une frontière externe sur l'oeil, **caractérisé en ce qu'**il comprend les étapes de :
- de façon sensiblement simultanée à l'acquisition de l'image de l'oeil dans le spectre infrarouge, acquérir une image de l'oeil dans un spectre visible,
- préalablement au traitement de l'image infrarouge, déterminer la frontière externe de l'iris à partir de l'image dans le spectre visible.

2. Procédé selon la revendication 1, **caractérisé en ce qu'**il comprend l'étape d'extraire au moins une caractéristique colorimétrique de l'image dans le spectre visible.

3. Procédé selon la revendication 2, **caractérisé en ce que** la caractéristique colorimétrique est une répartition spectrale.

4. Procédé selon la revendication 2, **caractérisé en ce que** les caractéristiques d'identification sont comparées à des caractéristiques d'identification d'iris mémorisés dans une bases de données contenant également des caractéristiques colorimétriques et **en ce que** la caractéristique colorimétrique extraite est utilisée pour effectuer un tri dans la base de données préalablement à la comparaison des caractéristiques d'identification.

5. Dispositif de reconnaissance d'iris pour la mise en oeuvre du procédé selon la revendication 1, comprenant des moyens d'acquisition (10, 11) d'une image de l'oeil dans un spectre infrarouge, **caractérisé en ce que** le dispositif comprend des moyens d'acquisition (6, 7, 8, 9) d'une image de l'oeil dans un spectre visible.

6. Dispositif selon la revendication 5, **caractérisé en ce qu'**il comprend un capteur (11) ayant une sensibilité spectrale dans l'infrarouge et au moins un capteur (7, 9) ayant une sensibilité spectrale dans le visible.

7. Dispositif selon la revendication 6, **caractérisé en ce qu'**il comprend un capteur (9) ayant une sensibilité spectrale dans le rouge et un capteur (7) ayant une sensibilité spectrale dans le bleu et le vert.

8. Dispositif selon la revendication 5, **caractérisé en ce qu'**il comprend un capteur (22) ayant une sensibilité spectrale couvrant le visible et le proche infrarouge.

## Claims

1. An iris recognition method, comprising the steps of acquiring an image of at least one eye of a user in an infrared spectrum, and of processing said image to extract therefrom identification characteristics from the iris as defined by an outer boundary in the eye, the method being **characterized in that** it comprises the steps of:
· acquiring an image of the eye in a visible spectrum substantially simultaneously with acquiring the image of the eye in the infrared spectrum; and
· prior to processing the infrared image, determining the outer boundary of the iris from the image in the visible spectrum.

2. A method according to claim 1, **characterized in that** it includes the step of extracting at least one colorimetric characteristic of the image in the visible spectrum.

3. A method according to claim 2, **characterized in that** the colorimetric characteristic is a spectral distribution.

4. A method according to claim 2, **characterized in that** the identification characteristics are compared with iris identification characteristics stored in a database that also contains colorimetric characteristics, and **in that** the extracted colorimetric characteristic is used to sort the database prior to comparing the identification characteristics.

5. Iris recognition apparatus for implementing the method of claim 1, the apparatus comprising means (10, 11) for acquiring an image of the eye in the infrared spectrum, and being **characterized in that** it further comprises means (6, 7, 8, 9) for acquiring an image of the eye in a visible spectrum.

6. Apparatus according to claim 5, **characterized in that** it comprises a sensor (11) having spectral sensitivity in the infrared and at least one sensor (7, 9) having spectral sensitivity in the visible.

7. Apparatus according to claim 6, **characterized in that** it includes a sensor (9) having spectral sensitivity in the red and a sensor (7) having spectral sensitivity in the blue and the green.

8. Apparatus according to claim 5, **characterized in that** it comprises a sensor (22) having spectral sensitivity covering both the visible and the near infrared.

## Patentansprüche

1. Verfahren zur Iriserkennung, umfassend die Schritte des Aufnehmens eines Bildes von mindestens einem Auge des Nutzers in einem Infrarotspektrum und des Verarbeitens dieses Bildes, um daraus Identifizierungsmerkmale aus der Iris zu gewinnen, die von einer äußeren Grenze am Auge begrenzt ist, **dadurch gekennzeichnet, dass** es die Schritte umfasst:
- im Wesentlichen gleichzeitig zur Aufnahme des Bildes des Auges im Infrarotspektrum Aufnehmen eines Bildes des Auges in einem sichtbaren Spektrum,
- vor der Verarbeitung des Infrarotbildes Bestimmen der äußeren Grenze der Iris anhand des Bildes im sichtbaren Spektrum.

2. Verfahren nach Anspruch 1, **dadurch gekennzeichnet, dass** es den Schritt des Gewinnens mindestens eines kolorimetrischen Merkmals aus dem Bild im sichtbaren Spektrum umfasst.

3. Verfahren nach Anspruch 2, **dadurch gekennzeichnet, dass** das kolorimetrische Merkmal eine Spektralverteilung ist.

4. Verfahren nach Anspruch 2, **dadurch gekennzeichnet, dass** die Identifizierungsmerkmale mit Irisidentifizierungsmerkmalen verglichen werden, die in einer Datenbank gespeichert sind, die ebenso kolorimetrische Merkmale enthält, und dass das gewonnene kolorimetrische Merkmal dazu verwendet wird, um vor dem Vergleich der Identifizierungsmerkmale eine Auswahl in der Datenbank zu treffen.

5. Vorrichtung zur Iriserkennung zum Durchführen des Verfahrens nach Anspruch 1, umfassend Aufnahmemittel (10, 11) zum Aufnehmen eines Bildes des Auges in einem Infrarotspektrum, **dadurch gekennzeichnet, dass** die Vorrichtung Aufnahmemittel (6, 7, 8, 9) zum Aufnehmen eines Bildes des Auges in einem sichtbaren Spektrum hat.

6. Vorrichtung nach Anspruch 5, **dadurch gekennzeichnet, dass** sie einen Sensor (11) umfasst, der eine spektrale Empfindlichkeit im Infrarotbereich hat, sowie mindestens einen Sensor (7, 9), der eine spektrale Empfindlichkeit im sichtbaren Bereich hat.

7. Vorrichtung nach Anspruch 6, **dadurch gekennzeichnet, dass** sie einen Sensor (9) umfasst, der eine spektrale Empfindlichkeit im roten Bereich hat, sowie einen Sensor (7), der eine spektrale Empfindlichkeit im blauen und im grünen Bereich hat.

8. Vorrichtung nach Anspruch 5, **dadurch gekennzeichnet, dass** sie einen Sensor (22) umfasst, der eine spektrale Empfindlichkeit hat, die den sichtbaren Bereich und das nahe Infrarot abdeckt.
